# EUROPEAN PATENT SPECIFICATION

(11) **EP 0 604 351 B1**
(45) Date of publication and mention of the grant of the patent: **17.09.1997**
(21) Application number: 93500155.2
(22) Date of filing: 30.11.1993
(51) Int. Cl.: A63G 31/00, A63B 9/00, A63G 21/00

(54) **A new structure for children's games**
Struktur für Kinderspiele
Structure pour jeux d'enfants

(30) Priority: 24.12.1992 ES 9202609
(43) Date of publication of application: 29.06.1994
(73) Proprietor: Rodriguez-Ferre, José Manuel, E-03440 Ibi (Alicante) (ES)
(72) Inventor: Rodriguez-Ferre, José Manuel, E-03440 Ibi (Alicante) (ES)
(74) Representative: Flaccus, Rolf-Dieter, Dr.

(56) References cited:
- US-A- 4 365 799
- US-A- 4 484 738
- US-A- 4 941 658

## Description

### FIELD OF THE INVENTION

The present Patent of Invention relates to a new structure for children's games which provides for the function to which it is directed several advantages to be listed hereinafter, apart from others inherent in its organization and constitution.

### BACKGROUND OF THE INVENTION

There are presently known structures to be used by children in their games, installed in public or private parks, gardens or appropriate places and made from metal parts, moulded material parts or others, fixedly attached together to form random shapes forming precincts accessible to the children, planes on different levels or places where to climb, passageways, staircases and slides which to descend, all designed so that the child may use them in his games, depending on his imagination, physical capacity and development, without running any risk of injury.

A fabricated amusement platform which can be easily assembled and dismantled so as to be reassembled into another pattern or at another location is disclosed in US-A-4 941 658. This amusement platform includes a plurality of skeleton members having at least one pair of columns adapted to be disposed vertically in relation to a mounting surface; a pluratlity of block members having a pair of throughholes adapted to be simultaneously passed by a pair of columns of one of the skeleton members; and a plurality of plate members each having a plurality of holes formed therethrough. Each of the holes of the plate members are spaced apart from each other at a distance equaling the distance between the two columns of one of the skeleton members. The fabricated amusement platform is assembled by passing the columns of the skeleton members through the throughholes of the block members and the holes of the plate members so as to vertically pile up te block members which may be interposed between the plate members and stably support the plate members which are suspended among the columns of certain of the skeleton members. In addition, the fabricated amusement platform can be disassembled by pulling the columns of the skeleton members out from the throughholes in the block members and the holes in the plate members. Therefore, the fabricated amusement platform can be easily assembled into another pattern or at another desired location. In addition, the fabricated amusement platform is preferably made of a plastic material so that children playing thereon will not be injured while playing thereon.

### SUMMARY OF THE INVENTION

In this invention, there has been devised a structure formed by a plurality of components made from rigid moulded material and including means for the assembly thereof, either by engagement, sliding, plugging or other systems, but always without the need to use complementary binding members, so that the structure may be assembled and dismantled with ease, even by the child user himself.

Some of the said components form corner modules and wall modules, to form a prismatic structure providing a precinct communicating at the top with the outside and through openings in the wall modules, through which the child may have access. Inside the precinct there is provided at least one raised horizontal member forming a platform located at a level attainable by the child, from which he may reach a slide or like component, external to the precinct, along which he may slide to the ground.

The structure is characterized in that it comprises corner parts and side parts and an upper bar connecting two opposite sides, the corner parts being constructed by vertically extending rectangular parts, provided at the longitudinal edges thereof with oblique extensions of material having an alternate slope, the free edges of which curve inwards in opposite directions, forming longitudinal guideways on both sides of said corner part adapted axially to receive respective edges of a rounded section or a section appropriate to the cross section of the guideway, said edges extending longitudinally parallel to the vertical edges of the side parts, with which they are connected by a portion of material of smaller section.

According to the foregoing, the structure is adapted to be assembled either outdoors or indoors and may also be transported and stored, after being dismantled, in a small space in a motor vehicle or at home.

The structure of the present Invention offers the advantages described above, apart from others which will be easily gathered from the embodiment described in fuller detail hereinafter to facilitate an understanding of the above mentioned features, while disclosing at the same time several details. For such purpose, the specification is accompanied by drawings in which a practical embodiment of the invention is shown as a non-limiting example of the scope of the present invention.

### BRIEF DESCRIPTION OF THE DRAWINGS

In the drawings:

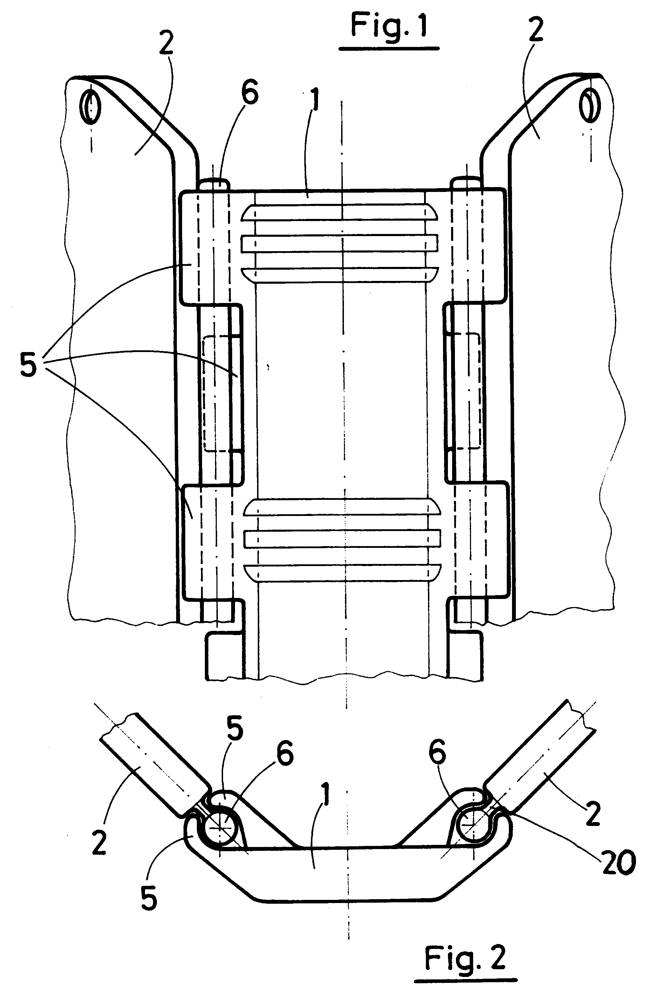

Figure 1 is a detail perspective view showing how the corner modules and the wall modules are joined together.
Figure 2 is a top view of the previous Figure contributing to an understanding of the joining system between the said modules.

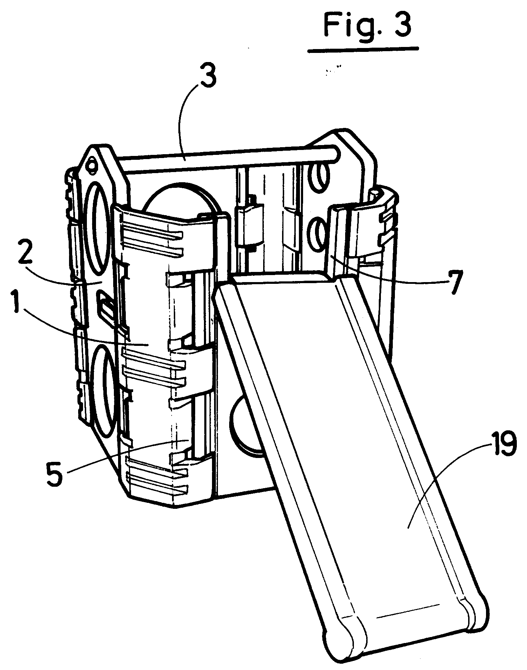

Figure 3 is a perspective view of the structure assembled in a functional arrangement, according to one embodiment.

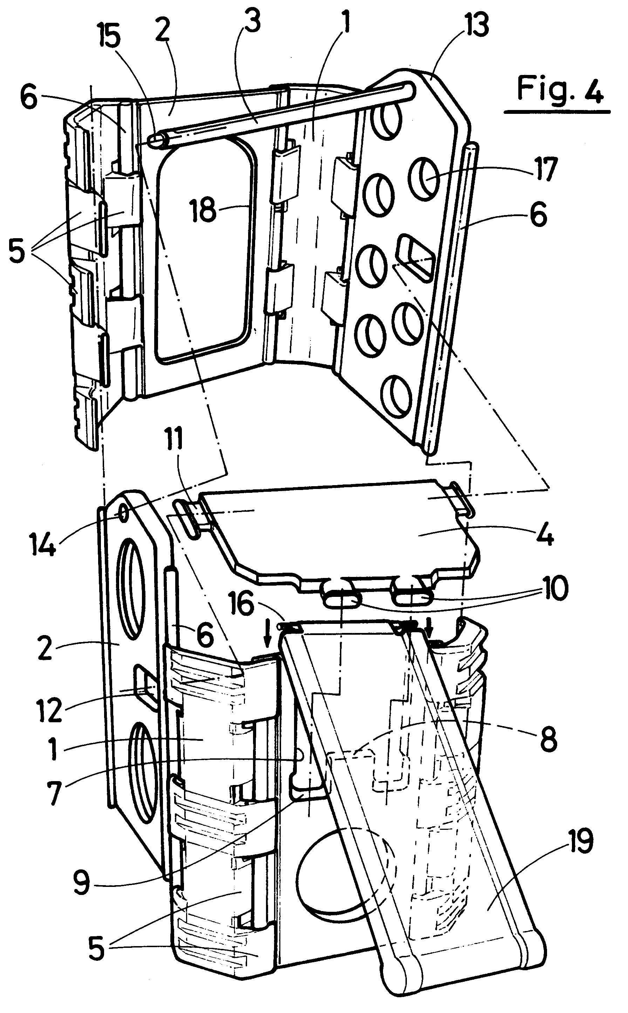

Figure 4 is an exploded perspective view better showing the components forming the structure, some of which are connected together or partially connected in the assembly stage, also according to one embodiment.

### DESCRIPTION OF ONE EMBODIMENT OF THE INVENTION

There is to be seen in the drawings a structure for children's games comprising four corner components 1, four side components 2, a round bar 3, a part 4 forming a horizontal platform at an intermediate height and a slide member 19.

The corner components 1 are provided at the longitudinal edges thereof with alternately oblique extensions 5 of material curving inwards in opposite directions to form guideways for respective rounded edges 6 extending along the vertical sides of the side components 2 and which are connected thereto by way of smaller section material portions 20, enabling said edges 6 to slide axially in the said guideways, forming inseparable connections when subjected to transverse pulling forces.

One of the side components is provided with a rectangular gap 7 which is formed on the bottom edge thereof with a projection 8 forming recesses 9 on either side to receive respective projections 10 formed on the part 4. Projections 11 of part 4 are engaged in openings 12 of the adjacent components 2, providing for stable horizontal support of the said part 4.

Two components 2 are provided at the top end thereof with respective pointed forms 13 with an orifice 14 for connection of the ends 15 of the bar 3.

The part 19 forming the slide is provided at the upper end thereof with transverse projections 16 for engagement with the sides of the rectangular gap 7, being fixed in the operative position, as shown in the figures.

## Claims

1. A structure for children's games, of the type comprising a plurality of parts (1;2) of rigid moulded material, in which there are integrated respective mating means to provide for the assembly thereof to form a prismatic precinct in use open at the top thereof, said structure including a in use horizontal part (4) situated at midheight thereof and an elongated rectangular part (19), provided with a longitudinal depression forming a track for a child to slide along, when said part (19) is situated on the outside of the structure and supported thereby, at the height of the horizontal part (4), in a sloping position, and comprising connecting links (5;6) arranged vertically,
characterized in that it comprises corner parts (1) and side parts (2) and an upper bar (3) connecting two opposite sides, the corner parts (1) being constructed by in use vertically extending rectangular parts, provided at the longitudinal edges thereof with oblique extensions (5) of material having an alternate slope, the free edges of which in use curve inwards in opposite directions, forming longitudinal guideways on both sides of said corner part (1) adapted axially to receive respective edges (6) of a rounded section or a section appropriate to the cross section of the guideway, said edges (6) extending in use longitudinally parallel to the vertical edges of the side parts (2), with which they are connected by a portion of material of smaller section (20).

2. A structure as claimed in claim 1, characterized in that one of the side parts (2) is provided with a rectangular gap (7) which is formed on the bottom edge thereof with a projection 8 forming recesses (9) on either side to receive respective projections (10) formed on the part (4).

3. A structure as claimed in claim 1 or 2, characterized in that projections (11) of part (4) are engaged in openings (12) of the adjacent parts (2).

4. A structure as claimed in claim 1 characterized in that two opposite parts (2) are provided at the top end thereof with respective pointed forms (13) with an orifice (14) for connecting of the ends (15) of the bar (3).

5. A structure as claimed in claim 1 characterized in that the part (19) is provided at the upper end thereof with transverse projections (16) for engagement with the sides of the rectangular gap (7).

## Patentansprüche

1. Struktur für Kinderspiele mit einer Vielzahl von Teilen (1, 2) aus festem geformten Material, in welchen jeweils ineinandergreifende Mittel integriert sind zur Montage derselben, um ein prismenförmiges Gebilde daraus zu bilden, das im Gebrauch oben offen ist, wobei die Struktur ein im Gebrauch horizontales Teil (4) aufweist, das in mittlerer Höhe gelegen ist, und ein längliches rechteckiges Teil (19) aufweist, das eine langgestreckte Vertiefung aufweist, um eine Rutschbahn für ein Kind zu bieten, wenn das Teil (19) an der Außenseite der Struktur angeordnet und durch diese in der Höhe des Teils (4) in einer geneigten Position gestützt wird, und wobei die Struktur senkrecht angeordnete Verbindungsglieder (5, 6) aufweist, dadurch gekennzeichnet, daß sie Eckteile (1) und Seitenteile (2) und eine oben angeordnete Strebe (3) aufweist, die zwei gegenüberliegende Seiten(teile) verbindet, daß die Eckteile (1) als im Gebrauch sich vertikal erstreckende rechteckige Teile konstruiert sind, die an ihren langgestreckten Kanten schräge Ansätze mit wechselseitiger Neigung aufweisen, deren freie Kanten, die im Gebrauch nach innen gerichtet sind, entgegengesetzt gekrüxmnt sind und langgestreckte Führungen auf beiden Seiten des Eckteils (1) bilden und axial abgestimmt sind, um entsprechende Kanten (6) eines gerundeten Abschnitts bzw. eines Abschnitts passend zum Querschnitt der Führung aufzunehmen, und daß sich die Kanten (6) im Gebrauch in Längsrichtung parallel zu den vertikalen Kanten der Seitenteile (2) erstrecken, mit denen sie durch einen dünneren Materialbereich (20) verbunden sind.

2. Struktur nach Anspruch 1, dadurch gekennzeichnet, daß eines der Seitenteile (2) eine rechteckige Aussparung (7) aufweist, die an ihrer unteren Kante mit einem Vorsprung (8)versehen ist, der an jeder Seite eine Aussparung (9) bildet, um entsprechende Vorsprünge (10) aufzunehmen, die am Teil (4) ausgebildet sind.

3. Struktur nach Anspruch 1 oder 2, dadurch gekennzeichnet, daß am Teil (4) ausgebildete Vorsprünge (11) mit Aussparungen (12) der angrenzenden Teile (2) im Eingriff stehen.

4. Struktur nach Anspruch 1, dadurch gekennzeichnet, daß zwei gegenüberliegende Teile (2) an ihrem oberen Ende eine giebelförmige Gestalt (13) mit einer Öffnung (14) zum Eingriff der Enden (15) der Strebe (3) aufweisen.

5. Struktur nach Anspruch 1, dadurch gekennzeichnet, daß das Teil (19) an seinem oberen Ende mit quer angeordneten Vorsprüngen (16) zum Eingriff mit den Seiten der rechteckigen Aussparung (7) versehen ist.

## Revendications

1. Structure pour jeux d'enfants, comprenant plusieurs pièces (1, 2) en matériau moulé rigide, dans lesquelles des moyens d'accouplement respectifs sont incorporés pour permettre leur assemblage afin de former une enceinte prismatique ouverte en utilisation à son sommet, ladite structure comprenant en utilisation une pièce horizontale (4) située à mi-hauteur et une pièce rectangulaire allongée (19), dotée d'une dépression longitudinale formant une piste le long de laquelle un enfant peut glisser, lorsque ladite pièce (19) est située sur l'extérieur de la structure et est ainsi supportée, à hauteur de la pièce horizontale (4), dans une position inclinée, et comprenant des éléments de liaison (5, 6) disposés verticalement,
caractérisée en ce qu'elle comprend des éléments d'angle (1) et des éléments latéraux (2) et une barre supérieure (3) reliant deux côtés opposés, les éléments d'angle (1) étant constitués par des pièces rectangulaires s'étendant verticalement en utilisation, leurs bords longitudinaux étant dotés de saillies obliques (5) du matériau ayant une pente alternée, dont les bords libres en utilisation s'incurvent vers l'intérieur dans des directions opposées, formant des glissières longitudinales des deux côtés dudit élément d'angle (1) adapté axialement pour recevoir les bords respectifs (6) d'une section arrondie ou d'une section appropriée à la coupe transversale de la glissière, lesdits bords (6) s'étendant en utilisation longitudinalement parallèlement aux bords verticaux des éléments latéraux (2), avec lesquels ils sont rattachés par une partie de matériau de section plus petite (20).

2. Structure selon la revendication 1, caractérisée en ce qu'un des éléments latéraux (2) présente une ouverture rectangulaire (7) qui est formée sur son bord intérieur avec une saillie (8) formant des évidements (9) sur chaque côté pour recevoir des saillies respectives (10) formées sur la pièce (4).

3. Structure selon la revendication 1 ou 2, caractérisée en ce que les saillies (11) de la pièce (4) sont engagées dans les ouvertures (12) des pièces adjacentes (2).

4. Structure selon la revendication 1 caractérisée en ce que deux pièces opposées (2) présentent à leur extrémité supérieure des formes respectives pointues (13) avec un orifice (14) pour le rattachement des extrémités (15) de la barre (3).

5. Structure selon la revendication 1 caractérisée en ce que la pièce (19) présente à son extrémité supérieure des saillies transversales (16) pour engagement dans les côtés de l'ouverture rectangulaire (7).
